# EUROPÄISCHE PATENTANMELDUNG

(11) **EP 2 706 302 A2**
(43) Veröffentlichungstag der Anmeldung: **12.03.2014**
(21) Anmeldenummer: 13182804.8
(22) Anmeldetag: 03.09.2013
(51) Int. Cl.: F24D 17/00, F24J 3/08

(54) **Schachtsystem für ein Geothermiesystem und Geothermiesystem**

(30) Priorität: 07.09.2012 DE 202012103415 U
(71) Anmelder: Uponor Innovation AB, 73061 Virsbo (SE)
(72) Erfinder: Rudolf, Jürgen, 96169 Lauter/Deusdorf (DE); Altmann, Maik, 97475 Zeil am Main (DE)
(74) Vertreter: Epping - Hermann - Fischer

(57) **Zusammenfassung**

Schachtsystem (50) für ein modulares Geothermiesystem (60) aufweisend ein Schachtgehäuse (40); und eine Mehrzahl von in wenigstens einer Gehäusewand (41) des Schachtgehäuses (40) angeordneten ersten Verbindungsstücken (21), wobei jedes der Mehrzahl von ersten Verbindungsstücken (21) wenigstens einen ersten Anschluss (10a) für eine Verbindungstechnik, insbesondere eine Schnellverbindungstechnik, außerhalb des Schachtgehäuses (40) und einen zweiten Anschluss (10b) für eine Verbindungstechnik, insbesondere eine Schnellverbindungstechnik, innerhalb des Schachtgehäuses (40) aufweist, wobei die ersten Anschlüsse (10a) außerhalb des Schachtgehäuses (40) wenigstens zwei unterschiedliche Größenprofile (18a, 18b, 18c) zum Anschluss von ersten Rohrleitungen (25c) mit unterschiedlichen Querschnitten aufweisen.

## Beschreibung

Die vorliegende Erfindung betrifft ein Schachtsystem für ein Geothermiesystem, welches ein Schachtgehäuse aufweist. Die Erfindung betrifft des Weiteren ein Geothermiesystem.

Die Geothermie bezeichnet die in der Erdkruste gespeicherte Wärmeenergie, welche der Erde als Wärmequelle entzogen und genutzt werden kann. Dabei wird zwischen oberflächennaher (bis zu 400 m Tiefe) und tiefer Geothermie (mehr als 400 m Tiefe) unterschieden. Geothermiesysteme nutzen diese Erdwärmeenergie beispielsweise entweder direkt zum Heizen bzw. Kühlen eines Gebäudes oder indirekt zur Erzeugung von Strom. Beispielsweise wird in einem oberflächennahen Geothermiesystem die Wärme mit Hilfe von Erdwärmekollektoren, Erdwärmesonden, Erdwärmekörben oder Erdsonden der Erde entzogen und an eine Wärmesenke abgegeben, wobei die Wärme in einem Fluid-Medium gespeichert ist. In der Regel entspricht die Wärmesenke einer Wärmepumpe, welche die gewonnene Erdwärme von einem niedrigen Temperaturniveau (beispielsweise 10° C) unter Energiezufuhr auf ein erforderliches, beispielweise ein für Heizzwecke bestimmtes, Temperaturniveau (beispielsweise 22° C) anhebt.

Im Allgemeinen weist ein Geothermiesystem ein Rohrleitungssystem auf, welches aus mehreren, unterschiedlich verbundenen Rohrleitungen besteht. Die Rohrleitungen, welche die in einem Fluid gespeicherte Wärme von einer Wärmequelle abführen, sind beispielsweise außerhalb eines Gebäudes an einem Schacht angeschlossen und werden innerhalb des Schachtes mit einem Verteiler zur Abgabe der Wärme verbunden. Es ist eine Aufgabe der Erfindung, Vorrichtungen zu beschreiben, welche einen einfachen und schnellen Aufbau eines Geothermiesystems erlauben.

Gemäß einem ersten Aspekt der Erfindung wird ein Schachtsystem für ein modulares Geothermiesystem beschrieben. Das Schachtsystem weist ein Schachtgehäuse auf. In wenigstens einer Gehäusewand des Schachtgehäuses ist eine Mehrzahl von ersten Verbindungsstücken angeordnet. Jedes der Mehrzahl von ersten Verbindungsstücken weist wenigstens einen ersten Anschluss für eine Verbindungstechnik, insbesondere eine Schnellverbindungstechnik, außerhalb des Schachtgehäuses und einen zweiten Anschluss für eine Verbindungstechnik, insbesondere eine Schnellverbindungstechnik, innerhalb des Schachtgehäuses auf. Die ersten Anschlüsse außerhalb des Schachtgehäuses weisen wenigstens zwei unterschiedliche Größenprofile zum Anschluss von ersten Rohrleitungen mit unterschiedlichen Querschnitten auf.

Das Schachtsystem gemäß dem ersten Aspekt der Erfindung sieht vor, dass jedes der Mehrzahl von ersten Verbindungsstücken wenigstens einen ersten Anschluss aufweist, welcher außerhalb des Schachtgehäuses wenigstens zwei unterschiedliche Größenprofile aufweist. Dies hat den Vorteil, dass erste Rohrleitungen, welche beispielsweise an einer Wärmequelle angeschlossen sind, mit unterschiedlichen Querschnitten an die ersten Verbindungsstücke angeschlossen werden können. Es ist deshalb nicht nötig, für jeden unterschiedlichen Querschnitt einer ersten Rohrleitung ein jeweiliges, passendes Verbindungsstück mit entsprechendem Querschnitt bereitzustellen. Bevorzugt sind die Anschlüsse für eine Schnellverbindungstechnik eingerichtet, weshalb auch kein spezielles Werkzeug zum Anschluss von Rohrleitungen und keine Schweißarbeit notwendig ist. Durch solche universell verwendbaren Verbindungsstücke werden Lagerhaltungskosten reduziert und ein schneller Aufbau des Geothermiesystems ermöglicht. Zudem wird vor allem bei beengten Platzverhältnissen eine erleichterte Montage gewährleistet.

Gemäß einer Ausgestaltungsform der Erfindung weisen die zweiten Anschlüsse innerhalb des Schachtgehäuses wenigstens zwei unterschiedliche Größenprofile zum Anschluss von zweiten Rohrleitungen auf. Dies ermöglicht es, verschiedene Rohrleitungen mit unterschiedlichen Querschnitten an jeweils dasselbe Verbindungsstück im Inneren des Schachtgehäuses anzuschließen. Dadurch wird das Schachtsystem um einen modularen Anschluss im Inneren des Schachtgehäuses erweitert, das ebenfalls Lagerhaltungskosten reduziert. Gerade innerhalb des Schachtsystems wird dadurch zusätzlich die Montage bei beengten Platzverhältnissen erleichtert.

In einer weiteren Ausgestaltungsform der Erfindung weist das Schachtsystem zudem wenigstens ein zweites, gegenüber dem ersten Verbindungsstück im Durchmesser größeres Verbindungsstück auf. Das zweite Verbindungsstück weist wenigstens einen dritten Anschluss für eine Verbindungstechnik innerhalb des Schachtgehäuses und einen vierten Anschluss für eine Verbindungstechnik außerhalb des Schachtgehäuses auf. Der dritte Anschluss weist wenigstens zwei unterschiedliche Größenprofile zum Anschluss an eine dritte Rohrleitung mit unterschiedlichen Querschnitten auf. Der vierte Anschluss weist ebenfalls wenigstens zwei unterschiedliche Größenprofile zum Anschluss an wenigstens eine vierte Rohrleitung mit unterschiedlichen Querschnitten auf.

An den dritten und/oder den vierten Anschluss des zweiten Verbindungsstücks können somit Rohrleitungen mit unterschiedlichen Durchmessern angeschlossen werden. Diese Rohrleitungen weisen in Regel größere Durchmesser als die Rohrleitungen zum Anschluss an ein erstes Verbindungsstück auf. Über den dritten Anschluss des zweiten Verbindungsstücks und einer dritten Rohrleitung kann das Schachtsystem mit einem Verteiler im Inneren des Schachtgehäuses verbunden werden. Über den vierten Anschluss des zweiten Verbindungsstücks und einer vierten Rohrleitung kann das Schachtsystem mit einer Wärmesenke, beispielsweise einer Wärmepumpe, außerhalb des Schachtgehäuses verbunden werden.

Ein derartiges zweites Verbindungsstück besitzt im Wesentlichen die gleichen Vorteile wie jedes der Mehrzahl von ersten, vorgenannten Verbindungsstücken.

Gemäß einer weiteren Ausgestaltungsform der Erfindung ist wenigstens ein Anschluss wenigstens eines der zuvor genannten Verbindungsstücke derart ablängbar, dass ein oberflächig profilierter Anschlussbereich eines der wenigstens zwei unterschiedlichen Größenprofile endständig zum Anschluss an eine Rohrleitung mit entsprechendem Durchmesser mittels einer Schnellverbindungstechnik freilegbar ist.

Gemäß einer weiteren Ausgestaltungsform der Erfindung ist wenigstens ein Anschluss wenigstens eines der vorgenannten Verbindungsstücke derart ablängbar, dass ein oberflächig ebener Anschlussbereich eines der wenigstens zwei unterschiedlichen Größenprofile endständig zum Anschluss an eine Rohrleitung mit im Wesentlichen gleichen Durchmesser mittels einer herkömmlichen Verbindungstechnik freilegbar ist. Dies bietet den Vorteil, dass die oberflächig profilierten Anschlussbereiche der wenigstens zwei unterschiedlichen Größenprofile des wenigstens einen Anschlusses abgelängt werden können, um einen ebenen Anschlussbereich zu erhalten. Dieser ebene Anschlussbereich des wenigstens einen Anschlusses kann dann beispielsweise durch eine Verwendung von Schweißmuffen mittels einer herkömmlichen Verbindungstechnik an eine Rohrleitung mit im Wesentlichen gleichen Durchmesser angeschlossen werden. Dadurch ist der modulare Anschluss um eine Anschlussvariante für eine herkömmliche Verbindungstechnik erweitert.

Gemäß einer weiteren Ausgestaltungsform der Erfindung ist wenigstens ein Anschluss der vorgenannten Verbindungsstücke an seinem Ende verschlossen. Bevorzugt sind alle Anschlüsse der Verbindungsstücke verschlossen, wobei die Anschlüsse und der Verschluss einstückig hergestellt sind, beispielsweise mittels des Spritzgussverfahrens. Dies bietet den Vorteil, dass ein solcher Anschluss eines Verbindungsstücks in einem Schachtsystem dicht verschlossen ist, falls er nicht verwendet wird. Damit ist das Verbindungsstück beispielsweise vor einem Austritt von Flüssigkeiten oder dem Eindringen von Erde geschützt.

Gemäß einem zweiten Aspekt der Erfindung wird ein Geothermiesystem beschrieben, welches ein Schachtsystem mit wenigstens einem ersten Verbindungsstück und wenigstens einem zweiten Verbindungsstück gemäß dem ersten Aspekt der Erfindung aufweist. Weiter weist es einen Verteiler mit einem Verteilersegment innerhalb eines Schachtgehäuses des Schachtsystems auf. Weiter weist es wenigstens eine Wärmequelle und wenigstens eine Wärmesenke auf. Das Geothermiesystem weist wenigstens eine erste Rohrleitung auf, wobei die erste Rohrleitung eine Verbindung zwischen einem ersten Anschluss des ersten Verbindungsstücks des Schachtsystems und der wenigstens einen Wärmequelle herstellt. Das Geothermiesystem weist wenigstens eine zweite Rohrleitung auf, wobei die zweite Rohrleitung eine Verbindung zwischen einem zweiten Anschluss des ersten Verbindungsstücks des Schachtsystems und dem wenigstens einen Verteilersegment herstellt. Weiter weist das Schachtsystem eine dritte Rohrleitung auf, wobei die dritte Rohrleitung eine Verbindung zwischen wenigstens einem dritten Anschluss des zweiten Verbindungsstücks zu dem Verteiler herstellt. Weiter weist das Schachtsystem eine vierte Rohrleitung auf, wobei die vierte Rohrleitung eine Verbindung zwischen wenigstens einem vierten Anschluss des zweiten Verbindungsstücks und der wenigstens einen Wärmesenke herstellt.

Das Geothermiesystem gemäß dem zweiten Aspekt der Erfindung besitzt im Wesentlichen die gleichen Vorteile wie das Schachtsystems gemäß dem ersten Aspekt der Erfindung. Das Geothermiesystem weist ein universelles Schachtsystem auf, welches sich durch seine hohe Modularität und seine Anschlussmöglichkeiten auszeichnet, ohne dass dabei verschiedene Einzelkomponenten, insbesondere Verbindungsstücke, bereitgehalten werden müssen.

Weitere vorteilhafte Ausgestaltungen der Erfindung sind in der nachfolgenden ausführlichen Beschreibung von Ausführungsbeispielen sowie den abhängigen Patentansprüchen offenbart.

Die Erfindung wird nachfolgend anhand von Ausführungsbeispielen unter Bezugnahme auf die angehängten Figuren beschrieben. In den Figuren werden unterschiedliche Instanzen gleichartiger Komponenten mit einem alphabetischen Suffix versehen, um diese besser unterscheiden zu können. Wird das Bezugszeichen ohne zugehöriges Suffix verwendet, beziehen sich die Ausführungen auf alle Instanzen der zugehörigen Komponente.

In den Figuren zeigen:
- Figur 1: Ein Geothermiesystem gemäß einem Ausführungsbeispiel der Erfindung und
- Figur 2: ein Anschluss eines Verbindungsstückes gemäß dem Ausführungsbeispiel der Erfindung.

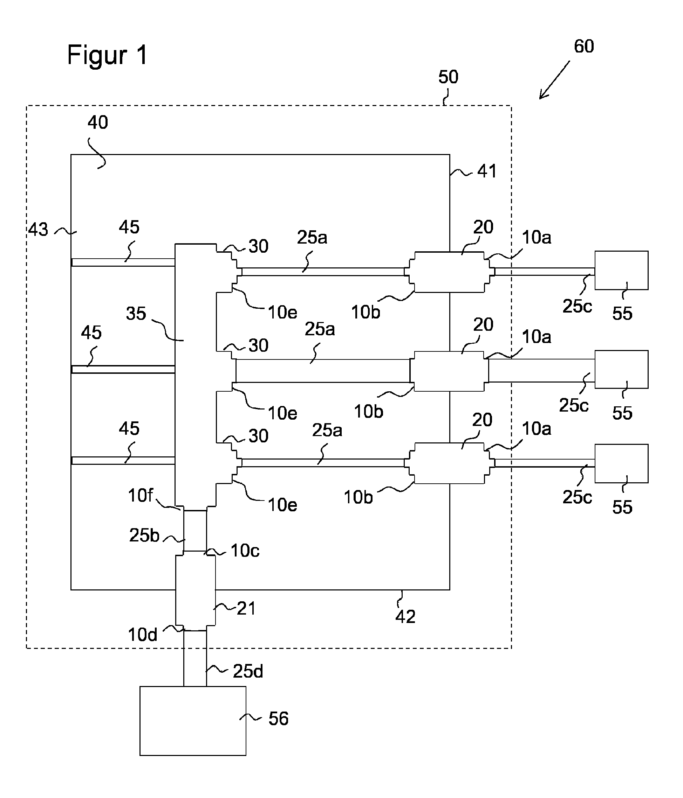

Figur 1 zeigt ein Geothermiesystem 60 gemäß einer Ausgestaltung der Erfindung. Das Geothermiesystem 60 weist Wärmequellen 55, eine Wärmesenke 56 und ein Schachtsystem 50 mit einem rechteckigen Schachtgehäuse 40 auf. Das Schachtgehäuse 40 weist eine erste Gehäuseseite 41 auf, auf welcher drei erste Verbindungsstücke 20 angebracht sind. Weiter weist das Schachtgehäuse 40 eine zweite Gehäuseseite 42 auf, auf welcher ein zweites Verbindungsstück 21 angebracht ist.

Die ersten Verbindungsstücke 20 weisen einen ersten Anschluss 10a außerhalb des Schachtgehäuses 40 und einen zweiten Anschluss 10b innerhalb des Schachtgehäuses 40 auf, welche jeweils drei Größenprofile aufweisen. Das zweite Verbindungsstück weist einen dritten Anschluss 10c innerhalb des Schachtgehäuses 40 und einen vierten Anschluss 10d außerhalb des Schachtgehäuses 40 auf, welche jeweils drei Größenprofile aufweisen. Im Inneren des Schachtgehäuses 40 ist ein Verteiler 35 angeordnet, welcher drei Verteilersegmente 30 aufweist. Die Verteilersegmente 30 weisen jeweils einen fünften Anschluss 10e mit jeweils drei Größenprofilen auf. Weiter weist der Verteiler 35 einen sechsten Anschluss 10f mit drei Größenprofilen auf. Die Verteilersegmente 30 bzw. der Verteiler 35 werden durch Halterungen 45, welche an einer dritten Gehäuseseite 43 beispielsweise durch Schraub-, Klemm- oder Steckverbindungen angebracht sind, gehalten.

Die ersten Verbindungsstücke 20 sind über Rohrleitungen 25a mit den Verteilersegmenten 30 verbunden. Die Rohrleitungen 25a weisen dabei gemäß Figur 1 verschiedene Durchmesser auf und sind jeweils über entsprechende Größenprofile an einem zweiten Anschluss 10b und einem fünften Anschluss 10e angeschlossen. Weiter sind die ersten Verbindungsstücke 20 jeweils über Rohrleitungen 25c mit den Wärmequellen 55 verbunden. Die Rohrleitungen 25c weisen dabei gemäß Figur 1 ebenfalls verschiedene Durchmesser auf und sind jeweils über entsprechende Größenprofile an einem ersten Anschluss 10a und einem nicht dargestellten Anschluss der Wärmequellen 55 angeschlossen. Die Wärmequellen 55 können beispielsweise Horizontalkollektoren, Erdwärmekörbe, Energiepfähle oder Erdsonden sein. Typischerweise sind der Durchmesser einer Rohrleitung 25a und der Durchmesser einer Rohrleitung 25c, welche über ein erstes Verbindungsstück 20 verbunden sind, gleichgroß.

Das zweite Verbindungsstück 21 ist über eine Rohrleitung 25b mit dem Verteiler 35 verbunden. Die Rohrleitung 25b ist dabei jeweils über ein dem Rohrdurchmesser entsprechendes Größenprofil an dem dritten Anschluss 10c sowie dem sechsten Anschluss 10f angeschlossen. Weiter ist das zweite Verbindungsstück 21 über eine Rohrleitung 25d mit der Wärmesenke 56 verbunden. Die Rohrleitung 25d ist dabei über ein dem Rohrdurchmesser entsprechendes Größenprofil an dem vierten Anschluss 10d und einem nicht dargstellten Anschluss der Wärmesenke 56 angeschlossen. Die Wärmesenke 56 kann beispielsweise eine Wärmepumpe sein, welche ein Temperaturniveau einer von den Wärmequellen 55 entzogenen Wärmeenergie unter Energiezufuhr anhebt, damit ein für einen vorbestimmten Zweck ausreichend hohes Temperaturniveau vorliegt. Typischerweise sind der Durchmesser der Rohrleitung 25b und der Durchmesser der Rohrleitung 25d, die über das zweite Verbindungsstück 20 verbunden sind, gleichgroß.

Innerhalb der Rohrleitungen 25 fließt ein Fluid, beispielsweise Sole, also ein Wasser-/Glykol-Gemisch, um Wärme von den Wärmequellen 55 aufzunehmen, welche über die Rohrleitungen 25c, die ersten Verbindungstücke 20 und die Rohrleitungen 25a in den Verteiler 35 geführt wird. Über die Rohrleitung 25b, das zweite Verbindungsstück 21 und die Rohrleitung 25d wird die aufgenommene Wärme des Fluids an die Wärmesenke 56 abgegeben.

Gemäß der Ausgestaltung des Geothermiesystems 60 in Figur 1 ist nur der Vorlauf bzw. die Wärmegewinnung aus den Wärmequellen 55 beschrieben. Demzufolge ist das dargestellte Rohrleitungssystem gemäß Figur 1 nicht als Kreislauf zu verstehen, da der Rücklauf des Fluids nach Abgabe der Wärme an die Wärmesenke 56 aus Gründen der Übersichtlichkeit nicht dargstellt ist. Das Schachtsystem 50 eignet sich auch für den Rücklauf. Vor- und Rücklauf können auch in einem Schachtgehäuse 40 mit zwei Verteilern 35 untergebracht sein.

Wie beschrieben wird Wärme von den Wärmequellen 55 der Wärmesenke 56, beispielsweise einer Wärmepumpe, zugeführt. Alternativ ist es auch möglich, dass die Wärmequellen 55 Wärmesenken sind und die Wärmepumpe der Wärmesenke 56 eine Wärmequelle ist. Damit ist es möglich, dass die Wärmepumpe Wärme zum Kühlen, beispielsweise zum Kühlen eines Wohnraums, aufnimmt und diese Wärme über die Rohrleitung 25d und das Schachtsystem 50 an die Wärmesenken abgibt. Das Geothermiesystem 60 eignet sich demnach sowohl zum Abführen als auch zum Zuführen von Wärme.

Das Schachtgehäuse 40, welches gemäß Figur 1 rechteckig ausgestaltet ist, kann beispielsweise auch zylinderförmig oder in weiteren sinnvollen Formen ausgestaltet sein. Es weist beispielsweise Seitenlängen von zirka 1,20 m auf und kann beispielsweise 1 m tief sein. Das Schachtgehäuse 40 ist auf der Unterseite und der Oberseite, in der Regel druckwasserdicht, verschlossen (nicht dargestellt). Weiterhin ist es denkbar, dass das Schachtsystem 50 weitere, in der Figur 1 nicht dargestellte, erste und/oder zweite Verbindungsstücke 20 bzw. 21 im Schachtgehäuse 40 aufweist, beispielsweise zehn oder zwanzig erste und/oder zweite Verbindungsstücke 20 bzw. 21. Weiterhin kann das Schachtgehäuse 40 mehrere Verteiler 35 mit mehreren Verteilersegmenten 30 aufweisen. Damit kann beispielsweise der Vor- und Rücklauf des Fluids bewerkstelligt werden. Das Schachtgehäuse 40 kann beispielsweise im Wesentlichen aus einem Kunststoffwerkstoff oder einem Betonwerkstoff bestehen.

Die ersten Verbindungsstücke 20 und/oder das zweite Verbindungsstück 21 können beispielsweise im Wesentlichen aus einem Kunststoffwerkstoff bestehen. Die Größenprofile der Anschlüsse 10a und 10b der ersten Verbindungsstücke 20 und die Größenprofile der Anschlüsse 10e können beispielsweise Durchmesser von 25 mm, 32 mm und 40 mm aufweisen. Die Anschlüsse 10c und 10d des zweiten Verbindungsstücks 21 und der Anschluss 10f weisen im Allgemeinen Größenprofile mit größeren Durchmessern als die vorgenannten Anschlüsse 10a, 10b und 10e auf, beispielsweise 63 mm, 75 mm oder 90 mm.

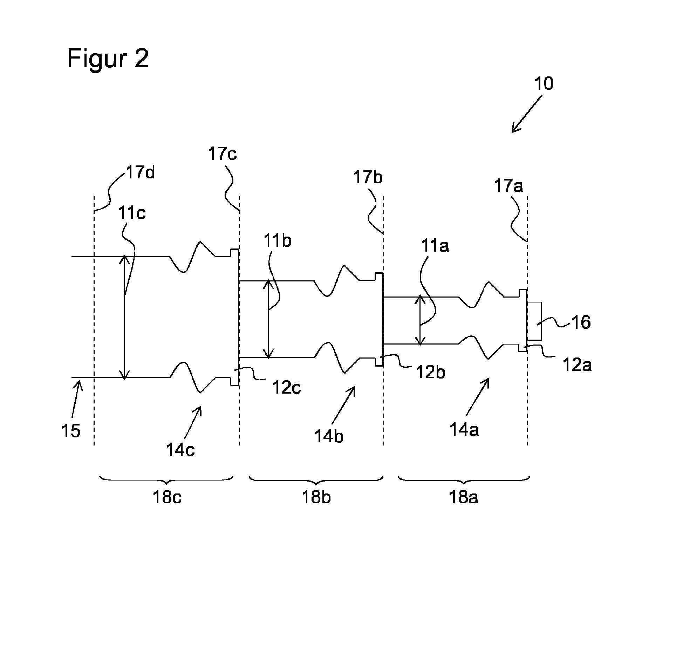

Die beschriebenen Verbindungen zwischen den ersten Verbindungsstücken 20 und den Wärmequellen 55 bzw. den Verteilersegmenten 30 sowie zwischen dem zweiten Verbindungsstück 21 und der Wärmesenke 56 bzw. dem Verteiler 35 werden mittels einer Schnellverbindungstechnik hergestellt. Die Schnellverbindungstechnik wird nachfolgend anhand der Figur 2 näher erläutert.

Figur 2 zeigt einen Anschluss 10 eines Schachtsystems 50 gemäß dem Ausführungsbeispiel nach Figur 1. Der Anschluss 10 weist drei Größenprofile 18a, 18b und 18c auf. Jedes Größenprofil 18a bis 18c weist einen Durchmesser 11a, 11b bzw. 11c auf. Weiter weist jedes Größenprofil 18 einen oberflächig profilierten Rohranschlussbereich 14a, 14b bzw. 14c auf. Der Anschluss 10 weist weiter verschiedene Abtrennebenen 17a bis 17d auf, die jeweils eine gedachte Schnittebene durch den Anschluss 10 darstellen, in der der Anschluss 10 abgelängt werden kann. Die Abtrennebenen 17a bis 17c liegen dabei im Wesentlichen in einer zur Längsachse des Anschlusses 10 senkrechten Ebene nahe eines jeweiligen Endstücks 12a, 12b bzw. 12c des jeweiligen Größenprofils 18a, 18b bzw. 18c. Die Abtrennebene 17d ist in einem ebenen Anschlussbereich 15 positioniert, wobei die Abtrennebene 17d an jeder Position des ebenen Anschlussbereichs 15 liegen kann, solange sie nicht in dem profilierten Rohranschlussbereich 14c liegt und einen breiten Anschlussbereich zum Anschluss einer geeigneten Verbindungstechnik bietet. Der Anschluss 10 ist endständig mit einem Verschluss 16 versehen.

Die drei Größenprofile 18a bis 18c sind zum Anschluss von Rohrleitungen mit einem Durchmesser von beispielsweise 25 mm, 32 mm und 40 mm geeignet. Der Verschluss 16 ist Teil des Anschlusses 10, welcher einstückig, beispielsweise in einem Spritzgussverfahren, hergestellt ist.

Soll beispielsweise eine Rohrleitung mit einem Durchmesser von 25 mm über das Größenprofil 18a an den Anschluss 10 angeschlossen werden, so wird entlang der Abtrennebene 17a der Verschluss 16 abgetrennt. Dies kann beispielsweise mit einem dafür vorgesehenen Rohrschneider oder einem sonstigen Werkzeug erfolgen. Damit liegt der profilierte Anschlussbereich 14a des Größenprofils 18a endständig frei, sodass die Rohrleitung mittels einer Schnellverbindungstechnik, welche nachfolgend erklärt wird, an den Anschluss 10 angeschlossen werden kann. Soll beispielsweise eine Rohrleitung mit einem Durchmesser von 32 mm über das Größenprofil 18b an den Anschluss 10 angeschlossen werden, so wird das erste Größenprofil 18a und der Verschluss 16 entlang der Abtrennebene 17b abgetrennt. Damit liegt der Anschlussbereich 14b des Größenprofils 18b endständig frei. Ebenso kann der Anschlussbereich 14c durch eine Abtrennung der beiden kleineren Größenprofile 18b und 18a an der Abtrennfläche 17c endständig, beispielsweise für einen Anschluss einer Rohrleitung mit einem Durchmesser von 40 mm, freigelegt werden. Somit ist es durch den Anschluss 10 möglich, eine Rohrleitung mit im Wesentlichen einem der drei Durchmesser 11a, 11b oder 11c mittels einer Schnellverbindungstechnik an den Anschluss 10 anzuschließen.

An den Anschluss 10 angeschlossene Rohrleitungen können im Wesentlichen aus einem Kunststoffwerkstoff wie beispielsweise Polyethylen (PE) oder einem Verbundwerkstoff bestehen, welcher einen so genannten "Memory Effect", also ein Formgedächtnis, aufweist. Dieses Formgedächtnis ist besonders für die Schnellverbindungstechnik geeignet, bei welcher ein Rohrende einer Rohrleitung mit Hilfe eines speziellen Werkzeuges aufgeweitet wird. Anschließend wird das Rohrende auf den Anschluss 10 aufgesteckt. Aufgrund des Formgedächtnisses zieht sich das Rohr auf seinen ursprünglichen Zustand beziehungsweise seinen ursprünglichen Durchmesser zurück. Dadurch wird eine fluiddichte und mechanisch feste Verbindung zwischen dem Rohr und dem Anschluss 10 hergestellt.

Weiterhin besteht die Möglichkeit, die drei Größenprofile 18a, 18b und 18c entlang der Abtrennfläche 17d abzutrennen, sodass der ebene Anschlussbereich 15, im Wesentlichen beispielsweise die äußere Oberfläche eines Rohrabschnittes, endständig am Anschluss 10 freiliegt. Der ebene Anschlussbereich 15 ermöglicht es, eine Rohrleitung mit im Wesentlichen gleichem Durchmesser über eine herkömmliche Verbindungstechnik anzuschließen. Beispielsweise kann eine Rohrleitung an den endständig freiliegenden Anschlussbereich 15 angelegt werden und mittels einer Schweißmuffe mit dem Anschluss 10 verbunden werden.

In einer weiteren, nicht dargestellten Ausführungsform kann der Anschluss 10 nach jedem profilierten Anschlussbereich 14a, 14b und 14c einen ebenen Anschlussbereich aufweisen, so dass der Anschluss 10 für jedes Größenprofil entweder mittels einer Schnellverbindungstechnik oder mittels einer herkömmlichen Verbindungstechnik angeschlossen werden kann. Die in den beschriebenen Ausführungsbeispielen dargelegten Merkmale eines Schachtsystems beziehungsweise eines Geothermiesystems können auf verschiedene Weise miteinander kombiniert werden, um die jeweils genannten Vorteile und/oder Funktionen zu verwirklichen.

### Bezugszeichenliste

- 10, 10a bis 10f: Anschluss
- 11a, 11b, 11c: Durchmesser
- 12a, 12b, 12c: Endstück
- 14a, 14b, 14c: profilierter Anschlussbereich
- 15: ebener Anschlussbereich
- 16: Verschluss
- 17a bis 17d: Abtrennebene
- 18a, 18b, 18c: Größenprofil
- 20: erstes Verbindungsstück
- 21: zweites Verbindungsstück
- 25a bis 25d: Rohrleitung
- 30: Verteilersegment
- 35: Verteiler
- 40: Schachtgehäuse
- 41: Gehäuseseite
- 42: Gehäuseseite
- 43: Gehäuseseite
- 45: Halterung
- 50: Schachtsystem
- 55: Wärmequelle
- 56: Wärmesenke
- 60: Geothermiesystem

## Patentansprüche

1. Schachtsystem (50) für ein modulares Geothermiesystem (60) aufweisend
- ein Schachtgehäuse (40); und
- eine Mehrzahl von in wenigstens einer Gehäusewand (41) des Schachtgehäuses (40) angeordneten ersten Verbindungsstücken (21), wobei
- jedes der Mehrzahl von ersten Verbindungsstücken (21) wenigstens einen ersten Anschluss (10a) für eine Verbindungstechnik, insbesondere eine Schnellverbindungstechnik, außerhalb des Schachtgehäuses (40) und einen zweiten Anschluss (10b) für eine Verbindungstechnik, insbesondere eine Schnellverbindungstechnik, innerhalb des Schachtgehäuses (40) aufweist, wobei
- die ersten Anschlüsse (10a) außerhalb des Schachtgehäuses (40) wenigstens zwei unterschiedliche Größenprofile (18a, 18b, 18c) zum Anschluss von ersten Rohrleitungen (25c) mit unterschiedlichen Querschnitten aufweisen.

2. Schachtsystem (50) nach Anspruch 1, bei welchem die zweiten Anschlüsse (10b) innerhalb des Schachtgehäuses (40) wenigstens zwei unterschiedliche Größenprofile (18a, 18b, 18c) zum Anschluss von zweiten Rohrleitungen (25a) mit unterschiedlichen Querschnitten aufweisen.

3. Schachtsystem nach einem der Ansprüche 1 bis 2, weiter aufweisend wenigstens ein zweites, gegenüber dem ersten Verbindungsstück (20) im Durchmesser größeres Verbindungsstück (21), wobei das zweite Verbindungsstück (21) wenigstens einen dritten Anschluss (10c) für eine Verbindungstechnik zum Anschluss an eine dritte Rohrleitung (25b) innerhalb des Schachtgehäuses (40) und einen vierten Anschluss (10d) für eine Verbindungstechnik zum Anschluss an eine vierte Rohrleitung (25d) außerhalb des Schachtgehäuses (40) aufweist.

4. Schachtsystem (50) nach Anspruch 3, bei welchem der dritte Anschluss (10c) wenigstens zwei unterschiedliche Größenprofile (18a, 18b, 18c) zum Anschluss an die dritte Rohrleitung (25d) mit unterschiedlichen Querschnitten und/oder der vierte Anschluss (10d) wenigstens zwei unterschiedliche Größenprofile (18a, 18b, 18c) zum Anschluss an die vierte Rohrleitung (25b) mit unterschiedlichen Querschnitten aufweisen.

5. Schachtsystem (50) nach einem der Ansprüche 1 bis 4, bei welchem wenigstens ein Anschluss (10) wenigstens eines der vorgenannten Verbindungsstücke (20, 21) derart ablängbar ist, dass ein oberflächig profilierter Anschlussbereich (14a, 14b, 14c) eines der wenigstens zwei unterschiedlichen Größenprofile (18a, 18b, 18c) endständig zum Anschluss an eine Rohrleitung (25a, 25b, 25c, 25d) mit entsprechendem Durchmesser mittels einer Schnellverbindungstechnik freilegbar ist.

6. Schachtsystem (50) nach einem der Ansprüche 1 bis 5, bei welchem wenigstens ein Anschluss (10) wenigstens eines der vorgenannten Verbindungsstücke (20, 21) derart ablängbar ist, dass ein oberflächig ebener Anschlussbereich (15) eines der wenigstens zwei unterschiedlichen Größenprofile (18a, 18b, 18c) endständig zum Anschluss an eine Rohrleitung (25a, 25b, 25c, 25d) mit im Wesentlichen gleichem Durchmesser mittels einer herkömmlichen Verbindungstechnik, insbesondere durch eine Verwendung von Schweißmuffen, freilegbar ist.

7. Schachtsystem (50) nach Anspruch 1 bis 6, bei welchem wenigstens ein Anschluss (10) der vorgenannten Verbindungstücke (20, 21) an seinem Ende verschlossen ist.

8. Schachtsystem (50) nach einem der Ansprüche 1 bis 7, bei welchem wenigstens ein Anschluss (10) der Mehrzahl von ersten Verbindungsstücken (20) jeweils drei verschiedene Größenprofile (18a, 18b, 18c), insbesondere zum Anschluss von ersten Rohrleitungen (25c) mit einem Durchmesser von 25 mm, 32 mm und 40 mm, und/oder wenigstens ein Anschluss (10) eines zweiten Verbindungsstücks (20) jeweils drei verschiedene Größenprofile (18a, 18b, 18c), insbesondere zum Anschluss von dritten Rohrleitungen (25d) mit einem Durchmesser von 63 mm, 75 mm und 90 mm, aufweisen.

9. Schachtsystem (50) nach einem der Ansprüche 1 bis 8, weiter aufweisend eine oder mehrere Halterungen (45), welche dazu eingerichtet sind, in dem Schachtgehäuse (40) wenigstens ein Verteilersegment (30) und/oder einen Verteiler (35) aufzunehmen.

10. Geothermiesystem (60) aufweisend,
- ein Schachtsystem (50) mit wenigstens einem ersten Verbindungsstück (20) und wenigstens einem zweiten Verbindungsstück (21), insbesondere nach einem der Ansprüche 1 bis 9;
- wenigstens einen Verteiler (35) mit wenigstens einem Verteilersegment (30) innerhalb eines Schachtgehäuses (40) des Schachtsystems (50);
- wenigstens eine Wärmequelle (55);
- wenigstens eine Wärmesenke (56);
- wenigstens eine erste Rohrleitung (25c), wobei die erste Rohrleitung (25c) eine Verbindung zwischen einem ersten Anschluss (10a) des ersten Verbindungsstücks (20) des Schachtsystems (50) und der wenigstens einen Wärmequelle (55) herstellt;
- wenigstens eine zweite Rohrleitung (25a), wobei die zweite Rohrleitung (25a) eine Verbindung zwischen einem zweiten Anschluss (10b) des ersten Verbindungsstücks (20) des Schachtsystems (50) und dem wenigstens einen Verteilersegment (30) herstellt;
- wenigstens eine dritte Rohrleitung (25b), wobei die dritte Rohrleitung (25b) eine Verbindung zwischen wenigstens einem dritten Anschluss (10c) des zweiten Verbindungsstücks (21) des Schachtsystems (50) und dem wenigstens einen Verteiler (35) herstellt; und
- wenigstens eine vierte Rohrleitung (25d), wobei die vierte Rohrleitung (25d) eine Verbindung zwischen wenigstens einem vierten Anschluss (10d) des zweiten Verbindungsstücks (21) des Schachtsystems (50) und der wenigstens einen Wärmesenke (56) herstellt.
